(19) **Europäisches Patentamt**
**European Patent Office**
**Office européen des brevets**

(11) **EP 4 521 494 A1**

(12) **EUROPÄISCHE PATENTANMELDUNG**

(43) Veröffentlichungstag:
**12.03.2025 Patentblatt 2025/11**

(21) Anmeldenummer: **24199012.6**

(22) Anmeldetag: **06.09.2024**

(51) Internationale Patentklassifikation (IPC):
**H01M 8/04029** (2016.01)  **H01M 8/0432** (2016.01)
**H01M 8/0438** (2016.01)  **H01M 8/04701** (2016.01)
**H01M 8/04746** (2016.01)  **B60L 58/33** (2019.01)

(52) Gemeinsame Patentklassifikation (CPC):
**H01M 8/04358; B60L 58/33; H01M 8/04007;**
**H01M 8/04029; H01M 8/04373; H01M 8/04417;**
**H01M 8/04723; H01M 8/04768;** H01M 2250/20

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **11.09.2023 DE 102023208779**

(71) Anmelder: **Siemens Mobility GmbH**
**81739 München (DE)**

(72) Erfinder: **Brendel, Thomas**
**40822 Mettmann (DE)**

(74) Vertreter: **Siemens Patent Attorneys**
**Postfach 22 16 34**
**80506 München (DE)**

(54) **VERFAHREN UND VORRICHTUNG ZUM KÜHLEN EINER BRENNSTOFFZELLE**

(57) Die Erfindung betrifft ein Verfahren zum Kühlen einer Brennstoffzelle, bei dem die Brennstoffzelle in einem Kühlmittelkreislauf angeordnet ist, dessen Kühlmittel mindestens zum Teil in einer Kühlanlage mithilfe eines Lüfters gekühlt wird, wobei eine SOLL-Vorlauftemperatur für das Kühlmittel bestimmt ist, mit den Schritten:
a) Ermitteln von Betriebsparametern des Kühlmittelkreislaufs, wobei als Betriebsparameter eine Vorlauftemperatur des Kühlmittels, ein Volumenstrom des Kühlmittels durch die Kühlanlage, eine Temperatur der durch die Kühlanlage geführten Umgebungsluft und eine Rücklauftemperatur des Kühlmittels erfasst werden, b) Ermitteln einer ersten Lüfterdrehzahl mit Hilfe der Betriebsparameter und der SOLL-Vorlauftemperatur, c) Messen einer IST-Vorlauftemperatur des Kühlmittels im Kühlmittelkreislauf, d) Regeln der Vorlauftemperatur des Kühlmittels auf die SOLL-Vorlauftemperatur über die Lüfterdrehzahl als Stellgröße.

FIG 1

EP 4 521 494 A1

## Beschreibung

Die Erfindung betrifft ein Verfahren zum Kühlen einer Brennstoffzelle und eine für das Verfahren geeignete Vorrichtung.

Brennstoffzellen werden in vielen technischen Gebieten zur Energieversorgung eingesetzt, beispielsweise für Fahrzeugantriebe in KFZ oder Schienenfahrzeugen. Im Betrieb müssen sie gekühlt werden. Hierzu wird üblicherweise ein Kühlmittelkreislauf eingesetzt, wobei es wichtig ist, dass die Vorlauftemperatur des Kühlmittels - d.h. die Temperatur des Kühlmittels vor der Brennstoffzelle - ausreichend konstant gehalten wird. Sowohl zu hohe als auch zu niedrige Vorlauftemperaturen beeinträchtigen den Betrieb der Brennstoffzelle. Der Begriff Brennstoffzelle wird dabei stellvertretend für einen Brennstoffzellenstapel (Englisch fuel cell stack), welcher eine Mehrzahl einzelner Brennstoffzellen umfasst, verwendet.

Um die benötigte Vorlauftemperatur zu erreichen und annähernd konstant zu halten, ist es bekannt, das Kühlmittel in einer Kühlanlage, beispielsweise einem Luft-Wasser-Wärmetauscher, zu kühlen. Die Kühlanlage ist über ein 3-Wege-Ventil mit dem Kühlmittelkreis bzw. dem inneren Kühlmittelkreis der Brennstoffzelle verbunden, wobei die Vorlauftemperatur über das 3-Wege-Ventil gesteuert und geregelt wird. Das Kühlmittel bzw. ein Teil des Kühlmittels wird aus dem inneren Kühlmittelkreis abgezweigt und durchläuft die Kühlanlage, in der die Umgebungsluft mithilfe eines Lüfters das Kühlmittel abkühlt. Das gekühlte Kühlmittel wird über das 3-Wege-Ventil wieder dem inneren Kühlmittelkreis zugeführt und dem dortigen ungekühlten Kühlmittel beigemischt, sodass die erforderliche Vorlauftemperatur erreicht wird. Mithilfe eines Temperatursensors für das Kühlmittel vor der Brennstoffzelle wird das Ventil gesteuert, und es wird auf die erforderliche Vorlauftemperatur mittels des 3-Wege-Ventils als Stellgröße geregelt.

Wenn die Brennstoffzelle in Teillast betrieben wird und daher weniger Abwärme entsteht, führt das 3-Wege-Ventil einen gro-βen Teil des Kühlmittels über den inneren Kreis, und nur ein geringer Teil des Kühlmittels fließt durch die Kühlanlage. Dadurch wird die Kühlanlage ineffizient betrieben. Da der Kühlanlage kein ausreichender Kühlmittelmassenstrom zugeführt wird, sinkt die mittlere treibende Temperaturdifferenz zwischen Kühlmittel und Umgebungsluft, wodurch die Kühlleistung sinkt.

Dieses Verfahren hat den Vorteil, dass der Luftvolumenstrom der Kühlanlage nicht angepasst werden muss, um die Vorlauftemperatur einzustellen und konstant zu halten. Der Lüfter kann mit konstanter Drehzahl betrieben werden, da die Steuerung der Kühlleistung über das 3-Wege-Ventil erfolgt. Das Verfahren hat aber auch den Nachteil, dass der Lüfter in der häufig vorliegenden Betriebssituation der Teillast mit einer höheren Drehzahl betrieben wird, als es zur Erzeugung der benötigten Kühlleistung erforderlich ist. Dies führt zu erhöhtem Energiebedarf, verringerter Lebensdauer des Lüfters und hohen Schallemissionen. Der erhöhte Energiebedarf wirkt sich negativ auf die nutzbare Energie der Brennstoffzelle aus, beispielsweise auf die Reichweite eines Schienenfahrzeugs.

Aus der US 2022/0209265 A1 ist ein Brennstoffzellensystem bekannt, bei welchem eine Lüfterdrehzahl abhängig von einer Temperatur der Umgebungsluft sowie der Ausgangsleistung der Brennstoffzelle geregelt wird, wobei ein Zusammenhang zwischen der Lüfterdrehzahl, der Temperatur und der Ausgangsleistung beispielsweise in einer Tabelle hinterlegt ist.

Aufgabe der Erfindung ist es, ein verbessertes Verfahren für die Kühlung einer Brennstoffzelle, insbesondere in einem Fahrzeug, sowie eine entsprechende Vorrichtung anzugeben.

Diese Aufgabe wird gelöst durch ein Verfahren und durch eine Anordnung gemäß den jeweiligen Merkmalen der unabhängigen Patentansprüche. Vorteilhafte Ausgestaltungen der Erfindung sind in abhängigen Patentansprüchen angegeben.

Die Erfindung sieht vor, zur Regelung der Vorlauftemperatur den Luftvolumenstrom durch die Kühlanlage über die Lüfterdrehzahl als Stellgröße zu steuern. Die Erfindung beruht außerdem auf der Erkenntnis, dass bei einer Änderung der Lüfterdrehzahl und damit des Luftvolumenstroms durch den Kühler die Vorlauftemperatur nur zeitverzögert geändert wird, da der Kühler und das Kühlmittel mit ihren Massen und entsprechenden Wärmekapazitäten ihre Temperatur bei einer Änderung der Lüfterdrehzahl nur zeitlich verzögert anpassen. Daher ist erfindungsgemäß vorgesehen, die für die erforderliche Vorlauftemperatur bzw. Soll-Vorlauftemperatur, welche vorab bestimmt ist, benötigte Lüfterdrehzahl bzw. erste Lüfterdrehzahl vorauszuberechnen und den Lüfter auf diese Drehzahl einzustellen. Die Vorausberechnung basiert auf mehreren Betriebsparametern des gesamten Kühlmittelkreislauf, in welchem die Brennstoffzelle angeordnet ist. Mit dem überlagerten Regelkreis mit der Lüfterdrehzahl als Stellgröße und der Vorlauftemperatur des Kühlmittels zur Brennstoffzelle als Regelgröße wird eine Nachkorrektur durchgeführt. Es wird also die gemessene Vorlauftemperatur, die IST-Vorlauftemperatur, mit der SOLL-Vorlauftemperatur verglichen und bei einer Abweichung wird die berechnete erste Lüfterdrehzahl geändert. Durch die Kombination von Vorausberechnung und anschließender Korrektur der Lüfterdrehzahl nach Bedarf wird die erforderliche Vorlauftemperatur ausreichend schnell erreicht.

Dies ist bei Anwendung in einem Fahrzeug wichtig, da sich die Betriebsparameter, die die erforderliche Kühlleistung beeinflussen, schnell ändern können. Eine reine Regelung ohne Vorausberechnung würde die Vorlauftemperatur nicht ausreichend konstant halten.

Eine erfindungsgemäße Vorrichtung umfasst einen Kühlmittelkreis mit einer Brennstoffzelle, wobei das Kühlmittel in einer Kühlanlage bzw. in einem Kühler mithilfe eines Lüfters kühlbar ist. Die Vorrichtung umfasst ferner mindestens eine Erfassungseinheit zum Erfassen von Betriebsparametern und eine Berechnungseinheit zum Ermitteln einer ersten Lüfterdrehzahl mit Hilfe der erfassten Betriebsparameter. Die Vorrichtung umfasst zudem eine Steuereinheit zum Einstellen der Lüfterdrehzahl auf die erste Lüfterdrehzahl, und eine Regeleinheit zum Regeln der Vorlauftemperatur über die Lüfterdrehzahl als Stellgröße.

Erfindungsgemäß werden zur Berechnung der ersten Lüfterdrehzahl folgenden Betriebsparameter erfasst:

- eine Vorlauftemperatur des Kühlmittels zur Brennstoffzelle,
- eine Rücklauftemperatur des Kühlmittels zum Kühler,
- ein Volumenstrom oder Massenstrom des Kühlmittels durch den Kühler, und
- eine Temperatur der durch den Kühler geführten Umgebungsluft.

In Kenntnis der Betriebscharakteristik der Kühlanlage, d.h. der Kühlleistung in Abhängigkeit von den Fluidmassenströmen und Fluidtemperaturen, kann mit diesen Größen der erforderliche Luftvolumenstrom und damit die erforderliche Lüfterdrehzahl bzw. erste Lüfterdrehzahl zur Erreichung einer bestimmten Vorlauftemperatur näherungsweise berechnet werden. Die Erfassung der Betriebsparameter geschieht entweder direkt mittels geeigneter Sensoren, oder sie werden aus weiteren Parametern abgeleitet. Insbesondere kann die Vorlauftemperatur mittels eines Temperatursensors und der Kühlmittel-Volumenstrom durch Messen der Drehzahl der Kühlmittelpumpe bestimmt werden. Ergänzend werden als weitere Betriebsparameter die Temperatur der Umgebungsluft sowie die Rücklauftemperatur berücksichtigt.

Die Vorausberechnung des erforderlichen Luftvolumen bzw. der ersten Lüfterdrehzahl kann während der Durchführung des Kühlverfahrens anhand der aktuell gemessenen Werte der Betriebsparameter erfolgen.

Für die Regelung der IST-Vorlauftemperatur auf die SOLL-Vorlauftemperatur kann die ermittelte erste Lüfterdrehzahl mit einem Faktor korrigiert werden. Liegt der Sollwert höher als der Istwert, wird die berechnete erste Lüfterdrehzahl mit einem Korrekturfaktor kleiner eins multipliziert und damit erniedrigt. Liegt der Sollwert niedriger als der Istwert, wird die berechnete erste Lüfterdrehzahl mit einem Korrekturfaktor größer eins multipliziert und damit erhöht. Der Korrekturfaktor wird mit einem Regler, beispielsweise einem PID-Regler, erzeugt.

Vorzugsweise läuft das Verfahren zyklisch mit einer vorgegebenen Zyklusdauer ab. In einem vorgegebenen Zeitraum (Zyklusdauer) wird das Verfahren durchlaufen, also die Betriebsparameter erfasst, die erste Lüfterdrehzahl ermittelt und korrigiert und der Lüfter entsprechend gesteuert, und nachfolgend wird dieser Ablauf erneut durchlaufen. Die Zyklusdauer kann wenige Millisekunden bis 10 Sekunden betragen, bevorzugt 100 Millisekunden bis eine Sekunde, besonders bevorzugt 200 Millisekunden.

In einer anderen Ausführungsform werden die Betriebsparameter kontinuierlich erfasst, die weiteren Verfahrensschritte, also Ermitteln der ersten Lüfterdrehzahl, Steuern des Lüfters und Regeln der Vorlauftemperatur, werden hingegen nur durchgeführt, wenn sich zumindest einer der Betriebsparameter um eine vorgegebene Abweichung ändert. Der Begriff kontinuierlich beinhaltet dabei auch ein Erfassen in bestimmten Zeitintervallen.

Gemäß einer Ausführungsform umfasst der Kühlmittelkreis einen inneren Kühlmittelkreis, in dem die Brennstoffzelle angeordnet ist, und einen damit verbundenen Kühlerkreis, in dem die Kühlanlage bzw. der Kühler angeordnet ist. Die Verbindung der beiden Kreise erfolgt über ein 3-Wege-Ventil. In diesem Fall kann das 3-Wege-Ventil in der Aufwärmphase der Brennstoffzelle eingesetzt werden, oder wenn auch bei ausgeschaltetem Lüfter noch eine zu hohe Kühlleistung erreicht wird. In der Aufwärmphase soll auch bei niedrigen Umgebungstemperaturen schnell die gewünschte Vorlauftemperatur von beispielsweise 60 Grad Celsius erreicht werden. Daher wird der Kühlerkreis abgetrennt, und das Kühlmittel zirkuliert nur im inneren Kühlkreis. Ebenso wird der Kühlerkreis durch das 3-Wege-Ventil abgetrennt, wenn bei ausgeschaltetem Lüfter die Kühlleistung noch zu hoch ist.

In einer anderen Ausführungsform ist die Kühlanlage nicht parallel zum inneren Kühlkreis angeordnet, sondern seriell in diesen integriert.

Die Erfindung wird im Folgenden anhand von Ausführungsbeispielen näher erläutert. Es zeigen in schematischer Darstellung

Fig.1   eine erfindungsgemäße Vorrichtung zum Kühlen einer Brennstoffzelle gemäß einem Ausführungsbeispiel, und

Fig.2   ein Ablaufdiagramm des erfindungsgemäßen Verfahrens gemäß einem Ausführungsbeispiel.

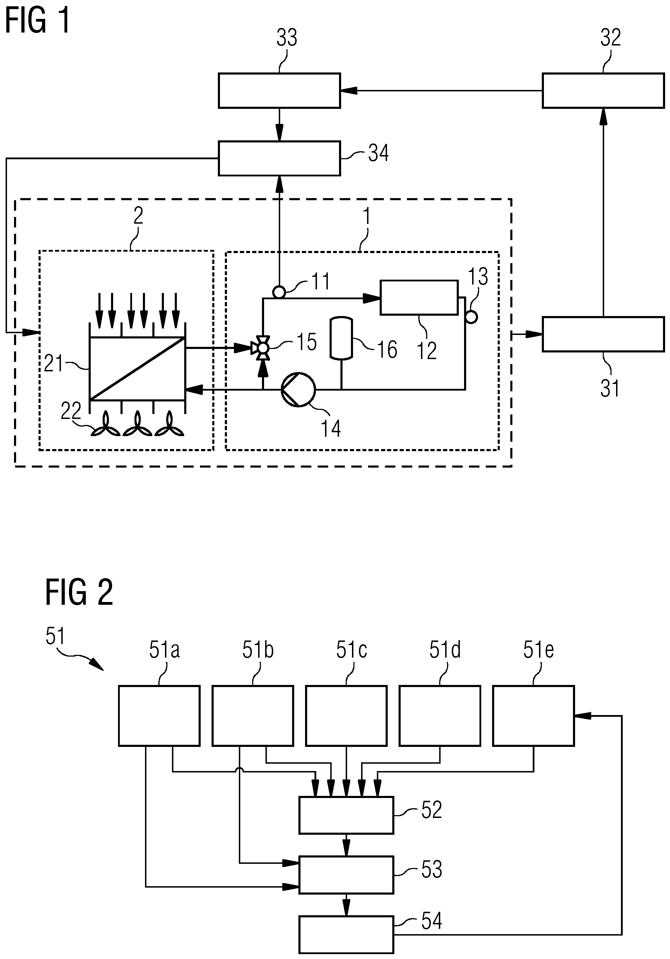

Fig. 1 zeigt einen Kühlmittelkreislauf mit einem inneren Kühlmittelkreislauf 1 und einem Kühlerkreislauf 2, der über einen Abzweig und ein 3-Wege-Ventil 15 mit dem inneren Kühlmittelkreislauf 1 verbunden ist. Im inneren Kühlmittelkreislauf 1 sind eine Brennstoffzelle 12, eine Kühlmittelpumpe 14, das 3-Wege-Ventil 15 und ein Druckausgleichsbehälter 16 angeordnet. Ferner ist nahe der Brennstoffzelle 12 ein erster Temperatursensor 11 vorhanden, der die Vorlauftemperatur des Kühlmittels vor der Brennstoffzelle 12 misst, sowie ein zweiter Temperatursensor 13, der die Rücklauftemperatur des Kühlmittels nach der Brennstoffzelle 12 misst. Der Kühlerkreislauf 2 umfasst eine Kühlanlage 21 bzw. einen beispielsweise als Luft-Wasser-Wärmetauscher ausgestalteten Kühler, in der bzw. dem das Kühlmittel über einen Wärmeaustausch mit der Umgebungsluft abgekühlt wird. Hierzu sind ein oder mehrere Lüfter 22 vorgesehen, mit welchen die Umgebungsluft forciert durch die Kühlanlage 21 geführt wird.

Die Vorrichtung zum Kühlen der Brennstoffzelle 12 umfasst ferner eine Erfassungseinheit 31, mit der verschiedene Betriebsparameter während des Betriebs der Vorrichtung ermittelt werden. Nach dem Ausführungsbeispiel werden die Temperatur der Umgebungsluft mittels eines nicht in der Figur dargestellten Sensors, die Vorlauftemperatur mit Hilfe des ersten Temperatursensors 11 und die Rücklauftemperatur mit Hilfe eines zweiten Temperatursensors 13 gemessen. Als weiterer Betriebsparameter wird der Volumenstrom des Kühlmittels im inneren Kühlmittelkreis 1 ermittelt, beispielsweise indem die Drehzahl der Kühlmittelpumpe 14 erfasst wird.

Die Vorrichtung zum Kühlen der Brennstoffzelle 12 umfasst ferner eine Berechnungseinheit 32. Diese berechnet aus den ermittelten Betriebsparametern den für die SOLL-Vorlauftemperatur benötigten Luftstrom in der Kühlanlage 21 und eine dafür benötigte erste Lüfterdrehzahl für den Lüfter 22.

Die Vorrichtung umfasst ferner eine Steuereinheit 33 für die Steuerung der Lüfterdrehzahl, die mit der Berechnungseinheit 32 verbunden ist. Die Steuereinheit 33 ist ferner mit einer Regeleinheit 34 verbunden. Ein Eingang der Regeleinheit 34 ist mit dem ersten Temperatursensor 11 verbunden, ein Ausgang der Regeleinheit 34 ist mit dem Lüfter 22 derart, dass die Lüfterdrehzahl als Stellgröße für die Regelung der Vorlauftemperatur verwendet wird.

Fig.2 zeigt ein Beispiel für den Ablauf des Verfahrens. Im laufenden Betrieb der Brennstoffzelle 12 werden in Schritt 51 als Betriebsparameter die Werte 51b bis 51e für die Vorlauftemperatur, die Rücklauftemperatur, die Umgebungsluft und den Volumenstrom des Kühlmittels ermittelt, teils durch direkte Messung u.a. mit den Sensoren 11 und 13, teils berechnet aus weiteren Betriebsparametern wie Pumpendrehzahl und anderen. Ferner wird die Soll-Vorlauftemperatur 51a vorgegeben.

Aus diesen Betriebsparametern, der Betriebscharakteristik der Kühlanlage und der geforderten SOLL-Vorlauftemperatur kann in Schritt 52 der erforderliche Luft-Volumenstrom berechnet werden, der in der Kühlanlage erreicht werden muss. Aus thermodynamischen Betrachtungen zur Wärmebilanz und zum Wärmeübergang (siehe unten) ergibt sich für den relativen Volumenstrom $f_{FC\_s}$ der Luft (d.h. den auf den maximal möglichen Volumenstrom bezogenen Volumenstrom, demnach eine dimensionslose Größe):

$$f_{FC\_s} = \left(\frac{1}{\dot{V}_{max}}\right) \frac{\dfrac{\dfrac{1}{c_{pa}} + \dfrac{1}{kAa}}{T_{r\_FC} + T_{f\_FC\_s} - 2 \cdot T_{ai}} \cdot c_c \cdot \dot{m}_c \cdot \left(T_{r\_FC} - T_{f\_FC\_s}\right)}{\dfrac{p_a}{R_a\left(273{,}15\ K\ +\ T_{ai}\right)}}$$

Hierbei bzw. in den folgenden Formeln ist

$c_{pa}$ - Wärmekapazität der Luft (J/KgK)

$\dot{m}_{a\_FC}$ - Massenstrom der Luft (kg/s)

$T_{ai}$ - Temperatur der Luft am Kühlereintritt (= ca. Umgebungstemperatur) (°C)

$T_{ao}$ - Temperatur der Luft am Kühleraustritt (°C)

$c_c$ - Wärmekapazität des Kühlmediums (J/KgK)

$\dot{m}_c$ - Massenstrom des Kühlmediums (kg/s)

$T_{r\_FC}$ - Temperatur des Kühlmediums am Kühlereintritt (= ca. Umgebungstemperatur) (°C)

$T_{f\ FCs}$ - Temperatur des Kühlmediums am Kühleraustritt (°C) (Soll-Vorlauftemperatur)

$k$ - Wärmedurchgangskoeffizient des Kühlers

$A$ - Wärmeaustauschfläche des Kühlers

$(T_c - T_a)$ - mittlere Treibende Temperaturdifferenz zw. Kühlmedium und Luft (K)

$\dot{V}_{FC\_s}$ - Volumenstrom der Luft (m³/s) (Soll)

$p_a$ = Umgebungsdruck

$R_a$ = 289 J/kgK = Spezifische Gaskonstante von Luft (mit einem Wasserdampfgehalt von 11 g pro kg trockener Luft).

$\dot{V}_{max}$ - Maximaler Volumenstrom der Luft (m³/s) (anlagenspezifisch)

$f_{FC\_s}$ - Auf den maximal möglichen Volumenstrom bezogener relativer Volumenstrom der Luft (dimensionslos).

Der Berechnung liegt zum einen die Energiebilanz um den Kühler 21 zugrunde:

$$c_{pa} \cdot \dot{m}_{a\_FC} \cdot (T_{ao} - T_{ai}) = c_c \cdot \dot{m}_c \cdot (T_{r\_FC} - T_{f\_FC}) \rightarrow T_{ao} = \frac{c_w \cdot \dot{m}_c}{c_{pa} \cdot \dot{m}_{a\_FC}} \cdot (T_{r\_FC} - T_{f\_FC}) + T_{ai}$$

Der Berechnung liegt zum anderen die Energiebilanz um den mit Luft durchströmten Teil des Kühlers mit Formulierung des Wärmedurchgangs innerhalb des Kühlers - also vom Kühlmittel durchströmten Teil zum luftdurchströmten Teil - zugrunde:

$$c_{pa} \cdot \dot{m}_{a_{FC}} \cdot (T_{ao} - T_{ai}) = k \cdot A \cdot (T_c - T_a)$$

Ferner wird für den Wärmefluss vom Kühlmittel zur Luft als Näherung angenommen

$$k \cdot A \cdot (T_c - T_a) \cong 2 \cdot a \cdot \dot{m}_{a\_FC} \cdot k \cdot A \cdot \left( \frac{T_{r\_FC} + T_{f\_FC}}{2} - \frac{T_{ai} + T_{ao}}{2} \right)$$

sowie für die Luft die Gesetze für ideale Gase angenommen werden, insbesondere:

$$\dot{V}_{FC\_s} = \frac{\dot{m}_{a\_FC}}{\frac{p_a}{R_a \, (273{,}15 \, K \, + \, T_{ai})}}$$

Woraus sich insgesamt die oben angegebene Formel für den relativen Volumenstrom $f_{FC\_s}$ der Luft ableiten lässt.

Der Luftvolumenstrom über einen Lüfter ist in erster Näherung proportional zur Drehzahl des Lüfters. Somit ist

$$f_{FC\_S} = N_s / N_{max}$$

und es gilt für die erste Lüfterdrehzahl:

$$N_S = N_{max} \cdot f_{FC\_s} = \left( \frac{N_{max}}{\dot{V}_{max}} \right) \frac{\frac{\frac{1}{c_{pa}} + \frac{1}{kAa}}{T_{r\_FC} + T_{f\_FC\_s} - 2 \cdot T_{ai}} \cdot c_c \cdot \dot{m}_c \cdot (T_{r\_FC} - T_{f\_FC\_s})}{\frac{p_a}{R_a \, (273{,}15 \, K + T_{ai})}}$$

Dabei sind die Größen $\dot{V}_{max}$ und $N_{max}$ anlagenspezifisch, ebenso die Größe $a \frac{s}{kg}$ ; (Konstante des Korrekturfaktors $2 \cdot a \cdot \dot{m}_{a\_FC}$) und kA. Auf diese Weise wird in Schritt 52 in der Berechnungseinheit 32 die erste Lüfterdrehzahl berechnet, die dem geforderten Luftstrom entspricht. Hierbei fließen auch Daten zur Betriebscharakteristik der Kühlanlage, also anlagenspezifische Daten, ein. In Schritt 52 wird also unter Kenntnis der Betriebscharakteristik der Kühlanlage, d.h. der Kühlleistung in Abhängigkeit von den Fluidmassenströmen und Fluidtemperaturen, der erforderliche Luftvolumenstrom und damit die erforderliche erste Lüfterdrehzahl zur Erreichung einer bestimmten Vorlauftemperatur näherungsweise berechnet.

Da nicht alle Einflussparameter in die Vorausberechnung eingehen, insbesondere die Wärmekapazität des Systems, und es damit bei der Vorlauftemperatur, die mit der ersten Lüfterdrehzahl erzielt wird, noch geringfügige Abweichungen zum Sollwert der Vorlauftemperatur geben kann, wird in Schritt 53 die IST-Vorlauftemperatur zur Brennstoffzelle mittels des ersten Temperatursensors 11 gemessen und mit dem Sollwert verglichen. Der Istwert fließt in einen Regelkreis ein, bei dem die Lüfterdrehzahl die Stellgröße für die Vorlauftemperatur (Regelgröße) bildet. Liegt der Sollwert höher als der Istwert, wird die erste Lüfterdrehzahl mit einem Korrekturfaktor kleiner eins multipliziert und damit erniedrigt. Liegt der Sollwert niedriger als der Istwert, wird die erste Lüfterdrehzahl mit einem Korrekturfaktor größer eins multipliziert und damit erhöht. Der Korrekturfaktor wird mit einem Regler, beispielsweise einem PID-Regler, erzeugt. Ein solcher Regler kann ausreichend schnell regeln.

In Schritt 54 wird die Lüfterdrehzahl auf den korrigierten Wert eingestellt.

Die Verfahrensschritte 51 bis 54 werden zyklisch durchlaufen, wobei die Zyklusdauer beispielsweise 200 Millisekunden beträgt.

**Patentansprüche**

1. Verfahren zum Kühlen einer Brennstoffzelle,

   bei dem die Brennstoffzelle (12) in einem Kühlmittelkreislauf (1) angeordnet ist, dessen Kühlmittel mindestens zum Teil in einer Kühlanlage (21) mithilfe eines Lüfters (22) gekühlt wird,
   wobei eine SOLL-Vorlauftemperatur für das Kühlmittel bestimmt ist,
   mit den Schritten:

   a) Ermitteln von Betriebsparametern des Kühlmittelkreislaufs, wobei als Betriebsparameter eine Vorlauftemperatur des Kühlmittels, ein Volumenstrom des Kühlmittels durch die Kühlanlage (21), eine Temperatur der durch die Kühlanlage (21) geführten Umgebungsluft und eine Rücklauftemperatur des Kühlmittels erfasst werden,
   b) Ermitteln einer ersten Lüfterdrehzahl mit Hilfe der Betriebsparameter und der SOLL-Vorlauftemperatur,
   c) Messen einer IST-Vorlauftemperatur des Kühlmittels im Kühlmittelkreislauf (1),
   d) Regeln der Vorlauftemperatur des Kühlmittels auf die SOLL-Vorlauftemperatur über die Lüfterdrehzahl als Stellgröße.

2. Verfahren nach Anspruch 1, **dadurch gekennzeichnet, dass** die erste Lüfterdrehzahl während des Kühlverfahrens berechnet wird.

3. Verfahren nach Anspruch 1 oder 2, **dadurch gekennzeichnet, dass** die Verfahrensschritte a) bis d) zyklisch durchlaufen werden.

4. Verfahren nach -Anspruch 1 oder 2, **dadurch gekennzeichnet, dass** der Verfahrensschritt a) kontinuierlich durchgeführt wird und die Verfahrensschritte b) bis d) nur dann erneut durchlaufen werden, wenn sich ein in Schritt a) ermittelter Betriebsparameter um eine vorgegebene Abweichung geändert hat.

5. Verfahren nach einem der vorhergehenden Ansprüche, **dadurch gekennzeichnet, dass** ein innerer Kühlmittelkreislauf (1) des Kühlmittelkreislaufs , in dem die Brennstoffzelle (12) angeordnet ist, und ein Kühlerkreislauf (2) des Kühlmittelkreislaufs, in dem die Kühlanlage (21) angeordnet ist, über ein 3-Wege-Ventil (15) verbunden sind, und die Kühlanlage (21) abgetrennt wird, wenn keine Kühlung des Kühlmittels erforderlich ist.

6. Verfahren nach einem der vorhergehenden Ansprüche, **dadurch gekennzeichnet, dass** die in Schritt c) gemessene IST-Vorlauftemperatur mit der SOLL-Vorlauftemperatur verglichen wird, wobei die erste Lüfterdrehzahl mit einem Korrekturfaktor kleiner eins multipliziert wird, wenn die SOLL-Vorlauftemperatur höher als die IST-Vorlauftemperatur liegt, und mit einem Korrekturfaktor größer eins multipliziert wird, wenn die SOLL-Vorlauftemperatur niedriger als die IST-Vorlauftemperatur ist, und wobei der Korrekturfaktor mittels eines Reglers, insbesondere eines PID-Reglers, erzeugt wird.

7. Vorrichtung zum Kühlen einer Brennstoffzelle, wobei die Vorrichtung zumindest umfasst:

   - eine Brennstoffzelle (12), die in einem Kühlmittelkreislauf (1) angeordnet ist, dessen Kühlmittel in einer Kühlanlage (21) mithilfe eines Lüfters (22) kühlbar ist,
   - eine Erfassungseinheit (31) zum Erfassen von Betriebsparametern des Kühlmittelkreislaufs, wobei als Betriebsparameter eine Vorlauftemperatur des Kühlmittels, ein Volumenstrom des Kühlmittels durch die Kühlanlage (21), eine Temperatur der durch die Kühlanlage (21) geführten Umgebungsluft und eine Rücklauftemperatur des Kühlmittels erfasst werden,
   - eine Recheneinheit (32) zum Ermitteln einer ersten Lüfterdrehzahl mithilfe der Betriebsparameter
   - eine Steuereinheit (33) zum Einstellen der Lüfterdrehzahl auf die erste Lüfterdrehzahl, und
   - eine Regeleinheit (34) zum Regeln der Vorlauftemperatur des Kühlmittels auf eine SOLL-Vorlauftemperatur über die Lüfterdrehzahl als Stellgröße.

8. Vorrichtung nach Anspruch 7, **dadurch gekennzeichnet, dass** der Kühlmittelkreislauf einen inneren Kühlmittelkreislauf (1) mit der Brennstoffzelle (12) und einen Kühlerkreislauf (2) mit der Kühlanlage (21) umfasst, wobei der Kühlerkreislauf (2) über ein 3-Wege-Ventil mit dem inneren Kühlmittelkreislauf (1) verbunden ist.

9. Fahrzeug, insbesondere Schienenfahrzeug, mit einer Vorrichtung nach Anspruch 7 oder 8.

FIG 1

FIG 2

Europäisches
Patentamt

European
Patent Office

Office européen
des brevets

**EUROPÄISCHER RECHERCHENBERICHT**

Nummer der Anmeldung

EP 24 19 9012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 4 677715 B2 (NISSAN MOTOR) 27. April 2011 (2011-04-27) | 1-3,7-9 | INV. H01M8/04029 |
| Y | * Zusammenfassung * * Abbildungen 1, 2 * | 4-6 | H01M8/0432 H01M8/0438 H01M8/04701 |
| X | CN 113 937 325 A (FOSHAN XIANHU LABORATORY; UNIV WUHAN TECH) 14. Januar 2022 (2022-01-14) * Zusammenfassung * * Abbildung 1 * | 1-9 | H01M8/04746 B60L58/33 |
| Y | JP 2017 022090 A (HYUNDAI MOTOR COMPANY CO LTD) 26. Januar 2017 (2017-01-26) * Absatz [0025] * * Absatz [0055] - Absatz [0057] * * Abbildung 1 * | 4,5 | |
| Y | JP 7 023680 B2 (DAINICHI CO LTD; KYOCERA CORP) 22. Februar 2022 (2022-02-22) * Absatz [0036] - Absatz [0038] * * Abbildung 3 * | 6 | |

RECHERCHIERTE
SACHGEBIETE (IPC)

F04D
H01M
B60L

Der vorliegende Recherchenbericht wurde für alle Patentansprüche erstellt

| Recherchenort | Abschlußdatum der Recherche | Prüfer |
|---|---|---|
| Den Haag | 16. Januar 2025 | Oliveira, Damien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 19 9012

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2025

| Im Recherchenbericht angeführtes Patentdokument | Datum der Veröffentlichung | Mitglied(er) der Patentfamilie | Datum der Veröffentlichung |
|---|---|---|---|
| JP 4677715 B2 | 27-04-2011 | JP 4677715 B2<br>JP 2005166540 A | 27-04-2011<br>23-06-2005 |
| CN 113937325 A | 14-01-2022 | KEINE | |
| JP 2017022090 A | 26-01-2017 | CN 106335385 A<br>DE 102016212125 A1<br>JP 6758931 B2<br>JP 2017022090 A<br>KR 101673360 B1<br>US 2017012310 A1 | 18-01-2017<br>12-01-2017<br>23-09-2020<br>26-01-2017<br>07-11-2016<br>12-01-2017 |
| JP 7023680 B2 | 22-02-2022 | JP 7023680 B2<br>JP 2019096484 A | 22-02-2022<br>20-06-2019 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Patentdokumente**

- US 20220209265 A1